**Europäisches Patentamt**

**European Patent Office**

**Office européen des brevets**

(19)

(11) Veröffentlichungsnummer : **0 157 156**
**B1**

(12) **EUROPÄISCHE PATENTSCHRIFT**

(45) Veröffentlichungstag der Patentschrift :
21.10.87

(51) Int. Cl.⁴ : **C 01 G 45/00**

(21) Anmeldenummer : 85102010.7

(22) Anmeldetag : 23.02.85

(54) **Kontinuierliches Verfahren zur Herstellung von Mangan-Karbonat.**

(30) Priorität : 05.03.84 DE 3408033

(43) Veröffentlichungstag der Anmeldung :
09.10.85 Patentblatt 85/41

(45) Bekanntmachung des Hinweises auf die Patenterteilung : 21.10.87 Patentblatt 87/43

(84) Benannte Vertragsstaaten :
BE DE FR GB

(56) Entgegenhaltungen :
DE-C- 2 051 917
FR-A- 1 015 769
US-A- 1 889 021
US-A- 2 608 463
INDUSTRIAL AND ENGINEERING CHEMISTRY, Band
31, Oktober 1939, Seiten 1272-1274, American Chemical Society, US; K.A. KOBE u.a.: "Precipitation of
manganous carbonate"

(73) Patentinhaber : HOECHST AKTIENGESELLSCHAFT
Postfach 80 03 20
D-6230 Frankfurt am Main 80 (DE)

(72) Erfinder : Hofmann, Bernhard, Dr.
Schaesbergstrasse 3
D-5030 Hürth (DE)
Erfinder : Lehr, Klaus, Dr.
Am Grünen Weg 10
D-5030 Hürth (DE)
Erfinder : Heymer, Gero, Dr.
Fasanenaue 12
D-5042 Erftstadt (DE)

## Beschreibung

Die vorliegende Erfindung betrifft ein Verfahren zur Herstellung von Mangan-Karbonat, das sich durch große Produktreinheit, gleichmäßige Körnung, hohe Schüttdichte und gute Oxidierbarkeit zu γ-Braunstein auszeichnet, und das mit hohen Raum-Zeit-Ausbeuten durch Ausfällung aus Mangan(II)-Salzlösungen mit Diammonium-Karbonat-Lösung erhalten wird.

Der Bedarf an Braunstein, speziell von γ-Braunstein als Rohstoff zur Herstellung von Hochleistungsbatterien steigt ständig.

In der Technik werden zwei grundsätzlich verschiedene Wege zur Herstellung von γ-Braunstein beschritten. Der durch die Elektrolyse von Mangan(II)-Salzlösungen produzierte γ-Braunstein ist von hoher Reinheit und erfüllt die hohen Anforderungen, die an den Rohstoff für die Herstellung von Hochleistungsbatterien gestellt werden müssen. Nachteilig bei diesem Elektrolyse-Verfahren ist jedoch der Einsatz aufwendiger Investitionen und der hohe Bedarf an elektrischer Energie.

Die zweite Herstellungsmöglichkeit von γ-Braunstein, auch als Kunst- oder Chemiebraunstein beschrieben, basiert auf rein chemischen Wegen. Bei diesen Verfahren wird aus einer Mangan(II)-Salzlösung entweder Mangan-Karbonat ausgefällt und nach einer Filtration in einer nachgeschalteten Wärmebehandlungsreaktion zu γ-Braunstein überführt, oder der Kunst- oder Chemiebraunstein wird durch Oxidationsmittel direkt ausgefällt und durch eine Wärmebehandlung nach der Abtrennung der Mutterlauge in seinen Eigenschaften den speziellen Anforderungen für den Einsatz in Batterien angepaßt.

In der DE-PS 1 205 067 und in der US-PS 3 437 435 werden Verfahren zur Herstellung von Kunstbraunstein beschrieben, bei denen durch die Zugabe von Hypochlorit zu Mangan(II)-Salzlösungen Braunstein mit Schüttdichten von unter 1 g/ml erhalten wird. Dieser Braunstein hat sich für den Einsatz in Hochleistungsbatterien nicht bewährt.

Das Verfahren der DE 3 036 962 A1 basiert auf der Arbeitsweise der US-PS 3 011 867. Ziel der DE 3 036 962 A1 ist es, das Produkt in Anlehnung an die Arbeitsweise der US-PS 3 011 867 in seiner Schüttdichte zu verändern. Aus der wäßrigen Lösung eines Mangan-Karbamat-Komplexes wird bei einer Fälltemperatur von 79 °C und Verminderung der Raum-Zeit-Ausbeute auf 6-7 kg $MnCO_3$ pro Stunde und $m^3$ Reaktorvolumen ein Produkt mit einem Schüttgewicht von 1,98 g/ml, einem mittleren Korndurchmes-ser von 61 μm und einer großen Kristallinität erhalten. Die schlechte Wirtschaftlichkeit dieser Arbeitsweise liegt in der geringen Lagerbeständigkeit der Mangan-Karbamatlösung, der schlechten Oxidierbarkeit des Mangan-Karbonats und der extrem schlechten Raum-Zeit-Ausbeute. Bei der Oxidation wird dieses Mangan-Karbonat innerhalb von 6 Stunden erst zu 83,8 % in γ-Braunstein umgewandelt.

Als Einsatzstoff für Hochleistungsbatterien hat sich diese Art des γ-Braunsteins ebenfalls nicht bewährt.

Die DE-AS 1 242 584 gibt ein Verfahren zur Fällung von Mangan-Karbonat aus Mangan(II)-Salzlösung an, bei dem ein pH-Wert von 5,7-7,2 und eine Fälltemperatur von oberhalb 55 °C eingehalten werden soll. Bei diesem Verfahren wird ein Mangan-Karbonat hoher Reinheit und Kristallinität erhalten. Nachteilig bei diesen Produkten ist die schlechte Oxidierbarkeit zu γ-Braunstein. Unter den Fällbedingungen in schwach saurem Medium kommt es außerdem leicht zur Bildung löslicher Mangan-Hydrogenkarbonat-Komplexverbindungen, durch welche die Mangan-Karbonat-Ausbeute verschlechtert wird. Die Mutterlauge enthält Natrium-Salze und kann aus diesem Grunde nicht zur Herstellung von Mangan(II)-Salzen rückgeführt werden ; sie stellt somit ein unerwünschtes Abfallprodukt dar.

Nach der Arbeitsweise der DE-C-2 051 917 wird Mangan-Karbonat aus einer wäßrigen Mangan(II)-Salzlösung durch eine Lösung, die Natrium-Karbonat und Natrium-bi-Karbonat im Verhältnis 6 : 4 bis 0 : 10 oder Ammonium-Karbonat und Ammonium-bi-Karbonat im Verhältnis 9,6 : 0,4 bis 0 : 10 enthält, ausgefällt. Weder die Mangan(II)-Salzlösung noch die Karbonatlösung enthält zusätzliche Ammoniumsalze von Mineralsäuren. Die Mangan(II)-Salzlösung und die Karbonatlösung werden in gleichen chemischen Äquivalenten an verschiedenen Stellen des Reaktionsgefäßes unter gründlicher Vermischung umge-setzt. Eine zusätzliche pH-Wert-Einstellung in der Fällstufe mit Ammoniak wird nicht vorgenommen. Die so hergestellten Produkte zeichnen sich durch hohe Schüttdichten und gute Kristallinität aus. Die erzielbare Raum-Zeit-Ausbeute ist mit 6 kg Mangan-Karbonat pro Stunde und $m^3$ Reaktorvolumen sehr gering. Die Oxidierbarkeit des Mangan-Karbonats ist so gering, daß im günstigsten Fall bei 350 °C nach 6 Stunden das Produkt nur zu 82 % in γ-Braunstein umgewandelt ist. Erst durch anderweitige Maßnahmen kann der Mangandioxidgehalt bis auf 91,8 % gesteigert werden. Auch diese Produkte haben sich für die Herstellung von Hochleistungsbatterien nicht bewährt.

Der Erfindung liegt nunmehr die Aufgabe zugrunde, ein kontinuierliches Verfahren zur Herstellung von Mangan-Karbonat, das sich durch große Produktreinheit, gleichmäßige Körnung, hohe Schüttdichte und gute Oxidierbarkeit in γ-Braunstein auszeichnet, und das mit hohen Raum-Zeit-Ausbeuten durch Ausfällungen aus Mangan(II)-Salzlösungen mit Diammonium-Karbonat-Lösung erhalten wird, anzugeben. Diese Aufgabe wurde in überraschender Weise gelöst.

Im einzelnen betrifft die Erfindung ein Verfahren zur Herstellung von derartigem Mangan-Karbonat, das dadurch gekennzeichnet ist, daß

2

a) ammoniumsalzhaltige Mangan(II)-Salzlösungen und ammoniumsalzhaltige Diammonium-Karbonat-Lösungen eingesetzt werden, wobei die ammoniumsalzhaltige Mangan(II)-Salzlösung 0,3-1,5 Mol/l Mangan(II)-Salz und 0,1-2,2 Mol/l Ammonium-Salz, insbesondere 0,1-1,1 Mol/l Ammonium-Sulfat oder 0,2-2,2 Mol/l Ammonium-Nitrat, enthält und die ammoniumsalzhaltige Diammonium-Karbonat-Lösung 1,0-3,0 Mol/l Diammonium-Karbonat und 0,4-3,0 Mol/l Ammonium-Salz, insbesondere 0,4-1,5 Mol/l Ammonium-Sulfat oder 0,8-3,0 Mol/l Ammonium-Nitrat, enthält und einen pH-Wert von 7,8-8,2 aufweist ;

b) 1,0-3,0 $m^3$/h ammoniumsalzhaltige Mangan(II)-Salzlösung pro $m^3$ nutzbarem Fällbehältervolumen eingespeist werden und

c) im Fällbehälter durch Zugabe von Ammoniak ein pH-Wert von 7,8-8,2 eingestellt wird.

Erfindungsgemäß werden besonders gute Produkte erhalten, wenn die Mangan(II)-Salzlösung 0,4-0,6 Mol/l Mangan(II)-Salz und 0,4-0,6 Mol/l Diammonium-Sulfat oder 0,8-1,2 Mol/l Ammonium-Nitrat enthält.

Vorteilhaft enthält die Diammonium-Karbonat-Lösung 2,4-2,6 Mol/l Diammonium-Karbonat und 0,9-1,1 Mol/l Diammonium-Sulfat oder 1,8-2,2 Mol/l Ammonium-Nitrat und weist einen pH-Wert von 7,9-8,1, insbesondere von 8,0 auf.

Besonders gute Produkte werden erhalten, wenn die Temperatur im Fällbehälter zwischen 55-65 °C, insbesondere bei 60 °C, gehalten wird, wobei die Produktentnahme aus dem Fällbehälter kontinuierlich erfolgt, und wobei stündlich 1,5-2,3 $m^3$ Mangan(II)-Salzlösung pro $m^3$ nutzbarem Fällbehältervolumen eingespeist werden. Während der Ausfällung wird im Fällbehälter durch Zugabe von Ammoniak ein pH-Wert von 7,9-8,1, insbesondere von 8,0, eingehalten. Um die Wirtschaftlichkeit des Verfahrens zu steigern, kann die Mutterlauge, die nach der Mangan-Karbonat-Abtrennung anfällt, rückgeführt werden zur Extraktion von Mangan$^{2+}$ aus Mn(II)-Verbindungen, insbesondere reduziertem Manganerz.

Die Produktqualität des erfindungsgemäßen Mangan-Karbonats kann durch folgende Herstellbedingungen verändert werden :

a) Zur Erreichung hoher Schüttdichten des Mangankarbonats während der Ausfällung werden hohe Temperaturen, hohe Rührerdrehzahlen sowie geringe Dosiermengen der Ausgangslösungen pro Zeiteinheit eingehalten und umgekehrt ;

b) zur Erreichung einer guten Oxidierbarkeit des Mangankarbonats zu γ-Braunstein während der Ausfällung werden niedere Temperaturen, niedere Rührerdrehzahlen sowie hohe Dosierungen der Ausgangslösungen pro Zeiteinheit eingehalten und umgekehrt ;

c) zur Erreichung einer guten Oxidierbarkeit des Mangankarbonats zu γ-Braunstein sind in beiden Ausgangslösungen steigende Konzentrationen an Ammoniumsalzen enthalten und umgekehrt ;

d) zur Erreichung einer gleichmäßigen Körnung wird unter konstanten Reaktionsbedingungen gearbeitet.

Mit dem erfindungsgemäßen Verfahren wird ein Mangan-Karbonat erhalten, das der folgenden Spezifikation entspricht :

Sulfatgehalt : } 0,3-0,7 Gew.%
Nitratgehalt : }
Schüttdichte : 1,4-1,8 g/$cm^3$
Oxidierbarkeit : 93 % nach 0,5 h ($\Delta mt_1$)
100 % nach 2,0 h ($\Delta mt_2$)
Mittlerer Korndurchmesser : 35-55 μm

Mangan-Karbonat wird mit einer Raum-Zeit-Ausbeute von 120-160 kg/h · $m^3$ nutzbarem Fällbehältervolumen mit 99 %iger Ausbeute, bezogen auf die eindosierte Mangan(II)-Salzlösung, erhalten.

Das nutzbare Fällbehältervolumen entspricht der Wassermenge, die in dem gerührten, gerade nicht mehr überlaufenden Behälter vorhanden ist.

Aus dem erfindungsgemäß hergestellten Mangan-Karbonat kann durch oxidierende Röstung bei 370 °C in einer Gasatmosphäre, bestehend aus einem bei 20 °C mit Wasser gesättigten Sauerstoffstrom, innerhalb einer Röstdauer von 2 Stunden ein γ-Braunstein erhalten werden, der sich vorzüglich für die Einarbeitung in Trockenbatterien eignet und der insbesondere für die Herstellung von Hochleistungsbatterien geeignet ist, wenn das Produkt noch in bekannter Weise mit Natrium-Chlorat nachbehandelt wird (DE-PS 1 140 183).

Die Schüttdichte wurde nach der Arbeitsweise von Scott ermittelt. Diese Arbeitsweise ist veröffentlicht in ASTM Book of Standards 1970 (7), Seiten 346-347.

Die Oxidierbarkeit wurde mittels Thermogravimetrie ermittelt. Hierzu wurden etwa 200 mg getrocknetes Mangan-Karbonat bei einer linearen Aufheizgeschwindigkeit von 10 °C/min auf 370 °C aufgeheizt und anschließend der Gewichtsverlust bei 370 °C in Abhängigkeit zur Temperzeit registriert.

Durch den Gasraum der Analysenproben wurde ein bei 20 °C mit Wasser gesättigter Sauerstoffstrom geleitet. Der theoretische Gewichtsverlust bei der Umwandlung von Mangan-Karbonat in Mangandioxid beträgt 24,4 %. Eventuell über diesem Gewichtsverlust liegende Werte sind beispielsweise begründet durch die Abgabe von eingeschlossenem Wasser oder durch eine Nitrat-Zersetzung. Ermittelt wurde der Gewichtsverlust nach Beendigung der Aufheizphase nach 30 min (in der beigefügten Tabelle mit $\Delta mt_1$ bezeichnet) und nach weiteren 60 min (in der Tabelle mit $\Delta mt_2$ bezeichnet).

Der mittlere Korndurchmesser wurde mittels eines Laser-Microtrac-Gerätes der Firma Leeds & Northrup, bestimmt.

Mit dem erfindungsgemäßen Verfahren ist es nunmehr möglich, gezielt die Produkteigenschaften des Mangan-Karbonats zu beeinflussen. Mit steigender Rührintensität und steigender Fälltemperatur wird ein Mangan-Karbonat mit höherer Schüttdichte und größerem mittlerem Korndurchmesser bei fallender Oxidierbarkeit produziert. Eine Erhöhung der Raum-Zeit-Ausbeute bei der Mangan-Karbonat-Fällung führt zu Produkten mit vergrößerter Oxidierbarkeit und abnehmenden Schüttdichten sowie verkleinerten mittleren Korndurchmessern.

Aus der beigefügten Tabelle sind diese Zusammenhänge in Verbindung mit den Ausführungsbeispielen im einzelnen näher ersichtlich. Schließlich sollen diese nun folgenden Beispiele das erfindungsgemäße Verfahren näher erläutern :

## Beispiel 1

Als Fällbehälter zur MnCO$_3$-Fällung diente ein Rührkessel mit einem Durchmesser von 0,4 m und einer Höhe von 0,8 m, entsprechend einem nutzbarem Volumen von 80 l. Als Rührwerk diente ein Intensivrührer mit variierbarer Umdrehungsgeschwindigkeit, welcher eine intensive radiale Rührung unter Ausbildung einer Trombe erlaubt. Der obere Behälterrand war als Überlauf für die MnCO$_3$-Maische ausgebildet. Mittels je einer Dosierpumpe wurden eine 0,6 molare MnSO$_4$-Lösung in 0,4 molarer (NH$_4$)$_2$SO$_4$-Lösung sowie eine 2,5 molare (NH$_4$)$_2$CO$_3$-Lösung in 1,0 molarer (NH$_4$)$_2$SO$_4$-Lösung mit einem pH-Wert von 8,0 in konstantem molarem Verhältnis von Mn$^{2+}$ : CO$_3^{2-}$ = 1 : 1 und in konstantem Volumen pro Zeit eindosiert. Durch Einleiten von Ammoniak wurde der pH-Wert auf 8,0 geregelt. Es wurden in den Fällbehälter 149 l/h MnSO$_4$-Lösung eindosiert, so daß sich eine Raum-Zeit-Ausbeute an Produkt von 123 kg MnCO$_3$ pro h und m$^3$ nutzbarem Fällbehältervolumen ergab. Die MnSO$_4$-Lösung wurde in die intensiv gerührte Vorlage, die zunächst aus Wasser, später aus Mutterlauge und ausgefälltem MnCO$_3$ bestand, bei einer Rührerdrehzahl von 600 U/min eindosiert.

Beide Lösungen wurden mit einer Temperatur von 60 °C dosiert. Die kontinuierlich überlaufende MnCO$_3$-Maische wurde auf einem Bandfilter von der Mutterlauge getrennt und der Filterkuchen wurde mit 0,5 l Wasser/kg MnCO$_3$ gewaschen und bei 105 °C im Stromtrockner getrocknet.

Die Vollständigkeit der MnCO$_3$-Fällung bzw. die Ausbeute, bezogen auf eingesetztes MnSO$_4$-Salz, wurden durch analytische Bestimmung des CO$_3^{2-}$- und Mn$^{2+}$-Gehaltes der Mutterlauge am Überlauf in regelmäßigen Zeitabständen kontrolliert. MnCO$_3$ wurde in 99 %iger Ausbeute, bezogen auf das eindosierte Mangan(II)-Salz erhalten. Der überlaufenden MnCO$_3$-Maische wurden in regelmäßigen Zeitabständen Proben entnommen. Hiervon wurden die Schüttdichte, der mittlere Korndurchmesser, der SO$_4$-Gehalt sowie die Oxidierbarkeit ermittelt. Nach ca. 1 Stunde Versuchsdauer wurde kontinuierlich ein gleichmäßiges Produkt erhalten, welches über die weitere Versuchsdauer konstante Eigenschaften aufwies. Der gemessene mittlere Korndurchmesser betrug 41,0 µm, die Schüttdichte war 1,41 g/cm$^3$ und das Produkt hatte einen SO$_4$-Gehalt von 0,7 Gew.%. Die Oxidierbarkeit des Produktes ist in der Tabelle angegeben.

## Beispiel 2

Es wurde wie in Beispiel 1 verfahren, nur wurden eine 0,5 molare MnSO$_4$-Lösung in 0,5 molarer (NH$_4$)$_2$SO$_4$-Lösung verwendet. Die Versuchsergebnisse sind in der Tabelle notiert.

## Beispiel 3

Es wurde wie in Beispiel 1 gearbeitet mit den Änderungen, daß eine 0,5 molare Mn(NO$_3$)$_2$-Lösung in 1,0 molarer (NH$_4$)NO$_3$-Lösung sowie eine 2,2 molare (NH$_4$)$_2$CO$_3$-Lösung in 2,0 molarer (NH$_4$)NO$_3$-Lösung bei einem pH-Wert von 8,0 und einer Temperatur von 80 °C umgesetzt wurden. Die Versuchsergebnisse sind in der Tabelle zusammengefaßt.

## Beispiel 4 (Vergleichsbeispiel)

Es wurde wie in Beispiel 1 verfahren mit den Änderungen, daß die Ausfällung des Mangan-Karbonats bei einer Temperatur von 20 °C erfolgte und die 0,6 molare MnSO$_4$-Lösung in 0,4 molarer (NH$_4$)$_2$SO$_4$-Lösung in einer Menge von 75 l/h eindosiert wurde, so daß sich eine Raum-Zeit-Ausbeute an Mangan-Karbonat von 62 kg/h · m$^3$ nutzbarem Fällbehältervolumen ergab. Die Versuchsergebnisse wurden in die Tabelle aufgenommen.

## Beispiel 5 (Vergleichsbeispiel)

Es wurde wie in Beispiel 1 verfahren mit der Änderung, daß in dem Fällbehälter die Rührerdrehzahl auf 300 U/min eingestellt wurde. Die Versuchsergebnisse sind in der Tabelle aufgelistet.

Beispiel 6 (Vergleichsbeispiel)

In den Fällbehälter wurden eine 1,1 molare MnSO$_4$-Lösung sowie eine 1 molare (NH$_4$)$_2$CO$_3$-Lösung im konstanten molaren Verhältnis von Mn$^{2+}$ : CO$_3^{2-}$ = 1 : 1 und in einer Menge von 22,4 l/h MnSO$_4$-Lösung, entsprechend einer Raum-Zeit-Ausbeute an Mangan-Karbonat von 34 kg/h · m$^3$ nutzbarem Fällbehältervolumen, eindosiert. Die Lösungen wurden mit 20 °C dem Fällbehälter, der ebenfalls auf 20 °C sowie auf einem pH-Wert von 6,5 gehalten wurde, zugeführt.

Beispiel 7 (Vergleichsbeispiel)

Es wurde wie in Beispiel 6 verfahren mit den Änderungen, daß die Ausfällung bei einer Temperatur von 60 °C und einer Rührerdrehzahl von 300 U/min bei einem pH-Wert von 7,2 in einer Dosierung von 40,8 l/h MnSO$_4$-Lösung, entsprechend einer Raum-Zeit-Ausbeute an Mangan-Karbonat von 62 kg/h · m$^3$ nutzbarem Fällbehältervolumen, erfolgte. Die Versuchsergebnisse sind in der Tabelle aufgenommen.

Beispiel 8 (Vergleichsbeispiel)

Es wurde wie in Beispiel 7 gearbeitet mit den Änderungen, daß die Temperatur im Fällungsbehälter auf 20 °C und die Rührerdrehzahl auf 600 U/min eingestellt wurden und die Mangan-Karbonat-Fällung bei einem pH-Wert von 8,0 vorgenommen wurde. Die Versuchsergebnisse enthält die Tabelle.

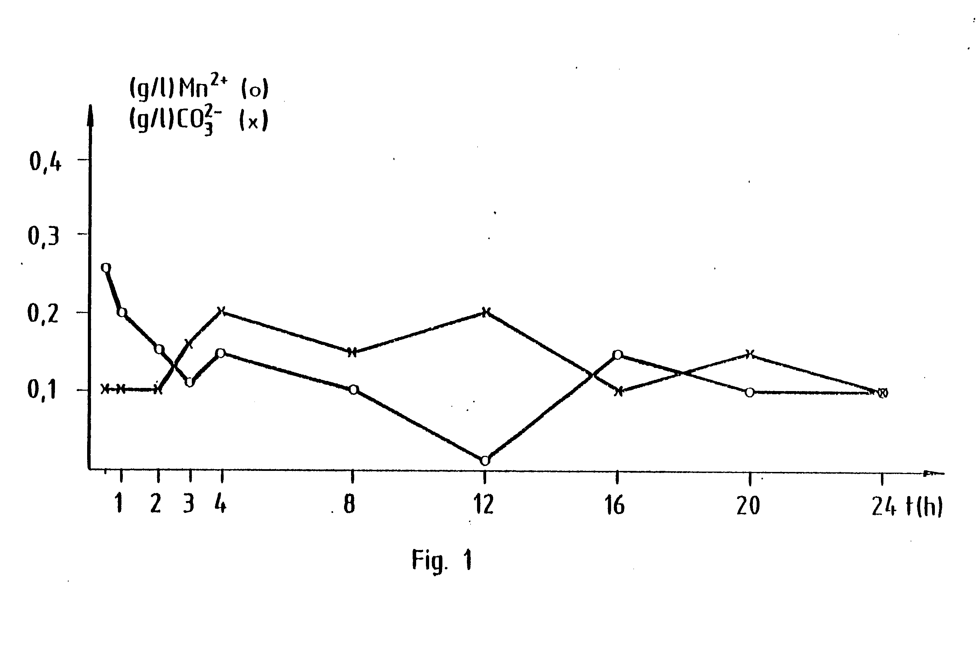

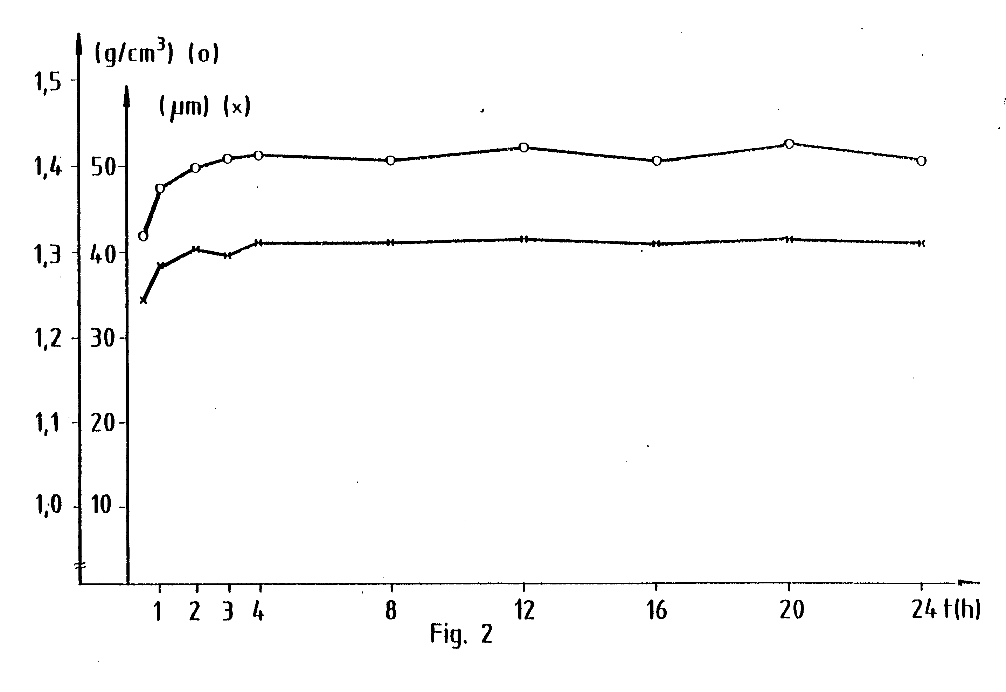

Schließlich sind die Figuren 1 und 2 beigefügt. In der Figur 1 sind die analytisch ermittelten Mn$^{2+}$- und CO$_3^{2-}$-Werte in Abhängigkeit von der Versuchsdauer und in der Figur 2 sind die ermittelten Schüttdichten und mittleren Korndurchmesser in Abhängigkeit von der Versuchsdauer dargestellt.

Abschließend sei vermerkt, daß unter dem in Ansprüchen, Beschreibung, Beispielen und in der Tabelle gebrauchten Begriff Lösung im Sinne der vorliegenden Erfindung jeweils wässerige Lösungen zu verstehen sind.

Tabelle

| Bei-spiel | pH | T | Rührung | Reaktionslösung | | RZA | MKD | SD | $SO_4$ | Aus-beute | $\triangle$ m $t_1$ | $\triangle$ m $t_2$ |
|---|---|---|---|---|---|---|---|---|---|---|---|---|
| | | °C | U/min | | | kg/m³.h | /um | g/cm³ | % | % | % | % |
| 1 | 8,0 | 60 | 600 | 2,5 m $(NH_4)_2CO_3$ <br> 1 m $(NH_4)_2SO_3$ | 0,6 m $MnSO_4$ <br> 0,4 m $(NH_4)_2SO_4$ | 123 | 41,0 | 1,41 | 0,7 | 99 | 21,7 | 24,6 |
| 2 | 8,0 | 60 | 600 | 2,5 m $(NH_4)_2CO_3$ <br> 1 m $(NH_4)_2SO_3$ | 0,5 m $MnSO_4$ <br> 0,5 m $(NH_4)_2SO_4$ | 123 | 40,5 | 1,40 | 0,7 | 99 | 22,3 | 24,5 |
| 3 | 8,0 | 80 | 600 | 2,2 m $(NH_4)_2CO_3$ <br> 2,0 m $(NH_4)NO_3$ | 0,5 m $Mn(NO_3)_2$ <br> 1,0 m $NH_4NO_3$ | 123 | 51,8 | 1,81 | 0,6* | 99 | 11,9 | 22,1 |
| 4 | 8,0 | 20 | 600 | 2,5 m $(NH_4)_2CO_3$ <br> 1 m $(NH_4)_2SO_3$ | 0,6 m $MnSO_4$ <br> 0,4 m $(NH_4)_2SO_4$ | 62 | 38,7 | 1,34 | 0,4 | 99 | 23,8 | 25,0 |
| 5 | 8,0 | 60 | 300 | 2,5 m $(NH_4)_2CO_3$ <br> 1 m $(NH_4)_2SO_3$ | 0,6 m $MnSO_4$ <br> 0,4 m $(NH_4)_2SO_4$ | 123 | 26,1 | 1,11 | 1,3 | 99 | 23,6 | 24,6 |
| 6 | 6,5 | 20 | 600 | 1 m $(NH_4)_2CO_3$ | 1,1 m $MnSO_4$ | 34 | 40,8 | 1,63 | 1,2 | 93 | 4,2 | 11,1 |
| 7 | 7,2 | 60 | 300 | 1 m $(NH_4)_2CO_3$ | 1,1 m $MnSO_4$ | 62 | 28,2 | 1,08 | 1,4 | 98 | 13,0 | 21,8 |
| 8 | 8,0 | 20 | 600 | 1 m $(NH_4)_2CO_2$ | 1,1 m $MnSO_4$ | 34 | 38,3 | 1,36 | 0,4 | 99 | 3,3 | 6,7 |

\*) $NO_3$

RZA = Raum-Zeit-Ausbeute

MKD = Mittlerer Korndurchmesser

SD = Schüttdichte nach Scott

$\Delta mt_1$ = Oxidierbarkeit bei 370 °C 30 min nach Beendigung der Aufheizphase

$\Delta mt_2$ = Oxidierbarkeit bei 370 °C 90 min nach Beendigung der Aufheizphase

**0 157 156**

### Patentansprüche

1. Kontinuierliches Verfahren zur Herstellung von Mangan-Karbonat, das sich durch große Produktreinheit, gleichmäßige Körnung, hohe Schüttdichte und gute Oxidierbarkeit zu γ-Braunstein auszeichnet, welches mit hohen Raum-Zeit-Ausbeuten durch Ausfällungen aus Mangan(II)-Salzlösungen mit Diammonium-Karbonat-Lösung erhalten wird, wobei während der Ausfällung ein molares Verhältnis von Mangan zu Karbonat von etwa 1 : 1 und eine Fällungstemperatur zwischen 20 °C und 80 °C eingehalten wird und die Mangan(II)-Salzlösung und die Diammonium-Karbonat-Lösung räumlich weit getrennt voneinander in den Fällbehälter eindosiert werden und während der Ausfällung intensiv gerührt wird, dadurch gekennzeichnet, daß

a) ammoniumsalzhaltige Mangan(II)-Salzlösungen und ammoniumsalzhaltige Diammonium-Karbonat-Lösungen eingesetzt werden, wobei die ammoniumsalzhaltige Mangan(II)-Salzlösung 0,3-1,5 Mol/l Mangan(II)-Salz und 0,1-2,2 Mol/l Ammonium-Salz, insbesondere 0,1-1,1 Mol/l Ammonium-Sulfat oder 0,2-2,2 Mol/l Ammonium-Nitrat, enthält und die ammoniumsalzhaltige Diammonium-Karbonat-Lösung 1,0-3,0 Mol/l Diammonium Karbonat und 0,4-3,0 Mol/l Ammonium-Salz, insbesondere 0,4-1,5 Mol/l Ammonium-Sulfat oder 0,8-3,0 Mol/l Ammonium-Nitrat, enthält und einen pH-Wert von 7,8-8,2 aufweist ;

b) 1,0-3,0 m³/h ammoniumsalzhaltige Mangan(II)-Salzlösung pro m³ nutzbarem Fällbehältervolumen eingespeist werden und

c) im Fällbehälter durch Zugabe von Ammoniak ein pH-Wert von 7,8-8,2 eingestellt wird.

2. Verfahren nach einem der vorhergehenden Ansprüche, dadurch gekennzeichnet, daß während der Ausfällung im Fällbehälter durch Zugabe von Ammoniak ein pH-Wert von 7,9-8,1, insbesondere von 8,0, eingehalten wird.

3. Verfahren nach einem der vorhergehenden Ansprüche, dadurch gekennzeichnet, daß die Temperatur im Fällbehälter zwischen 55-65 °C, insbesondere bei 60 °C, gehalten wird.

4. Verfahren nach einem der vorhergehenden Ansprüche, dadurch gekennzeichnet, daß stündlich 1,5-2,5 m³ ammoniumsalzhaltige Mangan(II)-Salzlösung pro m³ nutzbarem Fällbehältervolumen eingespeist werden.


### Claims

1. Continuous process for making manganese carbonate which combines high purity with regular particular size, high apparent density and good oxidizability to γ-manganese dioxide, and which is obtained in good space/time-yields by precipitating it from a manganese(II) salt solution by means of a diammonium carbonate solution, while maintaining during the precipitation a molar ratio manganese/carbonate of about 1 : 1 and a precipitation temperature of 20 to 80 °C, introducing the manganese salt solution and the diammonium carbonate solution into the precipitation apparatus through inlets widely spaced apart from one another and intensively stirring during the precipitation, characterized in that

a) a manganese(II) salt solution containing ammonium salt and a diammonium carbonate solution containing ammonium salt are used, of which the manganese(II) salt solution containing ammonium salt contains 0.3-1.5 mol/l manganese(II) salt and 0.1-2.2 mol/l ammonium salt, especially 0.1-1.1 mol/l ammonium sulfate or 0.2-2.2 mol/l ammonium nitrate, and the diammonium carbonate solution containing ammonium salt contains 1.0-3.0 mol/l diammonium carbonate and 0.4-3.0 mol/l ammonium salt, especially 0.4-1.5 mol/l ammonium sulfate or 0.8-3.0 mol/l ammonium nitrate, and presents a pH value of 7.8-8.2 ;

b) 1.0-3.0 m³/h manganese(II) salt solution containing ammonium salt is used per m³ utilizable volume of the precipitation apparatus, and

c) a pH-value of 7.8-8.2 is established in the precipitation apparatus by the addition of ammonia.

2. Process as claimed in the preceding claim, wherein a pH-value of 7.9-8.1, especially 8.0, is maintained during the precipitation in the precipitation apparatus by the addition of ammonia.

3. Process as claimed in one of the preceding claims, wherein a temperature between 55 and 65 °C, especially 60 °C, is maintained in the precipitation apparatus.

4. Process as claimed in any one of the preceding claims, wherein 1.5-2.5 m³/h manganese(II) salt solution containing ammonium salt is introduced per m³ utilizable volume of the precipitation apparatus.


### Revendications

1. Procédé en continu pour la préparation de carbonate de manganèse qui se distingue par une grande pureté, une granulométrie régulière, une densité apparente élevée et une bonne oxydabilité en bioxyde de manganèse γ et que l'on obtient avec des rendements spatiaux horaires élevés par précipitation à partir de solutions de sels de manganèse(II) avec une solution de carbonate d'ammonium, en maintenant pendant la précipitation un rapport molaire manganèse/carbonate d'environ 1 : 1 et une température de précipitation comprise entre 20 et 80 °C, en introduisant la solution de sel de manganèse(II) et la solution de carbonate d'ammonium dans le récipient de précipitation en des endroits très éloignés l'un de l'autre et en agitant énergiquement pendant la précipitation, caractérisé en ce que :

a) on utilise des solutions de sels de manganèse(II) contenant un sel d'ammonium ainsi que des solutions de carbonate d'ammonium contenant un sel d'ammonium, dont la solution de sel de manganèse(II) contenant du sel d'ammonium contient 0,3-1,5 mol/l de sel de manganèse(II) et 0,1-2,2 mol/l de sel d'ammonium, en particulier 0,1-1,1 mol/l de sulfate d'ammonium ou 0,2-2,2 mol/l de nitrate d'ammonium, et la solution de carbonate d'ammonium contenant un sel d'ammonium contient 1,0-3,0 mol/l de carbonate d'ammonium et 0,4-3,0 mol/l de sel d'ammonium, en particulier 0,4-1,5 mol/l de sulfate d'ammonium ou 0,8-3,0 mol/l de nitrate d'ammonium et présente un pH de 7,8-8,2 ;

b) on introduit 1,0-3,0 m³/h de solution de sel de manganèse(II) contenant un sel d'ammonium par m³ de volume utile du récipient de précipitation ;

c) on établit dans le récipient de précipitation un pH de 7,8-8,2 par addition d'ammoniac.

2. Procédé selon la revendication précédente, caractérisé en ce qu'on maintient pendant la précipitation dans le récipient de précipitation un pH de 7,9-8,1, en particulier de 8,0 par addition d'ammoniac.

3. Procédé selon l'une des revendications précédentes, caractérisé en ce que l'on maintient la température dans le récipient de précipitation à 55-65 °C, de préférence à 60 °C.

4. Procédé selon l'une des revendications précédentes, caractérisé en ce que l'on introduit par heure 1,5-2,5 m³ de solution de sel de manganèse(II) contenant un sel d'ammonium par m³ de volume utile du récipient de précipitation.

Fig. 1

Fig. 2